# EUROPÄISCHE PATENTSCHRIFT

(11) **EP 4 425 117 B1**
(45) Veröffentlichungstag und Bekanntmachung des Hinweises auf die Patenterteilung: **25.03.2026**
(21) Anmeldenummer: 24159799.6
(22) Anmeldetag: 26.02.2024
(51) Int. Cl.: G01G 19/12

(54) **WIEGESYSTEM ZUR DIREKTEN STÜTZLASTERFASSUNG VON SATTELAUFLIEGERN UND SATTELAUFLIEGER MIT EINEM SOLCHEN WIEGESYSTEM**
WEIGHING SYSTEM FOR DIRECT DETECTION OF THE SUPPORT LOAD OF SEMI-TRAILERS AND SEMI-TRAILERS WITH SUCH A WEIGHING SYSTEM
SYSTÈME DE PESAGE POUR LA DÉTECTION DIRECTE DE CHARGE DE SUPPORT DE SEMI-REMORQUES ET SEMI-REMORQUES AVEC UN TEL SYSTÈME DE PESAGE

(30) Priorität: 02.03.2023 DE 102023000755
(43) Veröffentlichungstag der Anmeldung: 04.09.2024
(73) Patentinhaber: ANNABURGER Nutzfahrzeug GmbH, 06925 Annaburg (DE)
(72) Erfinder: Mooshammer, Felix, 06917 Jessen (DE); Suhr, Andre´, 06886 Lutherstadt Wittenberg (DE)
(74) Vertreter: Einsiedler, Johannes

(56) Entgegenhaltungen:
- US-A1- 2017 314 986

## Beschreibung

Die vorliegende Erfindung betrifft ein Wiegesystem [1] zur direkten Stützlastmessung eines Sattelaufliegers [2] gemäß dem Oberbegriff des Anspruchs 1 sowie einen Sattelauflieger [2] mit einem solchen Wiegesystem [1] gemäß dem Oberbegriff des Anspruchs 10.

Die Bedeutung von universell einsetzbaren Lastkraftwagen (LKW), welche vorzugsweise auch in landwirtschaftlichen Betrieben einsetzbar sind (sog. Agrar-Lastwagen oder Agro-Trucks), nimmt in den letzten Jahren stetig zu. Unter dem Begriff "Agrar-Lastwagen" sind dabei LKW-Zugfahrzeuge zu verstehen, die mit einer Sattelkupplung, Kugelkopfkupplung oder auch mit Zapfwellen ausgestattet sind, landwirtschaftliche Anhänger, Maschinen und/oder Sattelauflieger ziehen und dadurch gewisse landwirtschaftliche Aufgaben auf einem Feld ausführen können, welche oftmals mit dem Transport von Material einhergehen. Darunter fallen beispielsweise das Ausbringen von Kalk, Dung und/oder Mineraldünger auf einem Feld oder das Pressen von Quaderballen aus Heu oder Stroh. Gleichzeitig ermöglichen derartige Agrar-Lastwagen allerdings auch den schnellen Transport der Ernte vom Feld zum Abnehmer über öffentliche Straßen und haben daher, wenn längere Distanzen überwunden werden müssen Vorteile gegenüber gewöhnlichen Traktoren. Zur Einhaltung von Gewichtsbegrenzungen beim Befahren öffentlicher Straßen, aber vor allem auch unter dem Aspekt des sog. "Precision Farming", ist dabei die Gewichtserfassung des Agrar-Lastwagens, speziell die Erfassung des Anhängergewichts in Echtzeit notwendig.

Unter "Precision Farming" wird ein Verfahren der ortsdifferenzierten und zielgerichteten Bewirtschaftung landwirtschaftlicher Nutzflächen verstanden. Dabei werden lokale und ökologisch standortspezifische Informationen genutzt um teilflächenspezifisch Nährstoffverfügbarkeit, Ertragserwartung und Schadensdruck am tatsächlichen Pflanzenbestand zu messen und den Umfang des Einsatzes von Betriebsmitteln (Düngermenge, Saatmenge und/oder Menge eines Pflanzenschutzmittels) sowie die Maschinen- und Arbeitszeit anhand dieser Messergebnisse zu bestimmen. Dieses Vorgehen kann vorteilhaft den Ertrag und die Produktqualität maximieren und Umweltbelastungen durch Überdüngung oder den übermäßigen Einsatz von Pflanzenschutzmitteln vorteilhaft vermeiden. Gleichzeitig wird dabei eine lückenlose Dokumentation des jeweiligen Produktionsprozesses gewährleistet.

An die Genauigkeit der Gewichtserfassung werden daher hohe Anforderungen gestellt. Neben dem Gesamtgewicht des Fahrzeugs, welches sich aus dem Gewicht der Zugmaschine und dem des Anhängers ("Aufliegers") inkl. Ladung zusammensetzt, ist vor allem die Erfassung der Zuladung in Echtzeit während der Benutzung, also insbesondere eine Erfassung der Gewichtsänderung des Aufliegers während der Benutzung relevant. Für die Gewichtserfassung eines Aufliegers wird gewöhnlich zwischen der sog. Stützlast, also der Last, die der Auflieger auf der Zugmaschine im Bereich der Kupplung abstützt und der sog. Achslast, also der Last, welche über die Achsen des Aufliegers auf die Fahrbahn übertragen wird, unterschieden. Die Stützlast und die Achslast können unabhängig voneinander gemessen und das Aufliegergesamtgewicht dann durch Addition der beiden Werte ermittelt werden.

Die EP 2 028 459 A1 offenbart in diesem Zusammenhang beispielsweise eine Vorrichtung zur Bestimmung des Lastzustandes eines Tank-Containers mit wenigstens zwei Sensoren, wobei zumindest ein erster Sensor an einer Kupplung zwischen dem Zugfahrzeug und dem Anhänger und/oder an einem Stützbein des Anhängers und zumindest ein weiterer Sensor an einer Radachse des Anhängers angeordnet ist.

Die US 2017/314986 A1 offenbart ein Anhänger-Wiegesystem.

Aus der DE 195 08 239 A1 ist zudem eine LKW-Auflieger-Wiegeeinrichtung bekannt, bei der die Bestimmung der Gewichtsbelastung der Achsen über die Achsenfederung des Aufliegers erfolgt und die Stützlast über eine, zwischen dem Auflieger und einem die Zugmaschine und den Auflieger verbindenden Königszapfen ausgebildete, Vorrichtung zur Gewichtsmessung bestimmt wird. Die Vorrichtung zur Gewichtsmessung umfasst hierbei ein Kraftübertragungselement und eine Gewichtsmesseinrichtung, welche über ein Verbindungsstück mit dem Königszapfen des Aufliegers verbunden sind. Verbindungsstück und Königszapfen sind dabei fest miteinander verbunden und wechselwirken als Einheit mit der Sattelkupplung der jeweiligen Zugmaschine.

Die EP 0 607 855 A1 beschreibt eine Vorrichtung zur Messung und Anzeige des Beladezustandes eines Sattelaufliegers, bei der an der Auflagekupplung der Zugmaschine mit dem Sattelauflieger, insbesondere zwischen einer Gleitplatte und einer Sattelplatte des Sattelaufliegers im Bereich des Königszapfens der Zugmaschine, ein Druck- oder Kraftsensor angeordnet ist.

Die DE 44 02 528 C2 und die WO 2021/046 091 A1 offenbaren schließlich Anordnungen von Messmitteln an einem Sattelfahrzeug mit einer Sattelkupplung zur Verbindung der Sattelzugmaschine und dem Sattelanhänger, wobei die Messmittel zwischen Sattelanhänger und Sattelzugmaschine an deren Verbindungsteilen zwischen Sattelanhänger und Sattelkupplung angeordnet sind.

All diesen Vorrichtungen ist gemein, dass die Bestimmung der Stützlast stets über die Messung einer Krafteinwirkung auf den Königszapfen erfolgt und dabei nicht nur Vertikalkräfte, welche vorwiegend durch den Ladezustand des jeweiligen Sattelaufliegers hervorgerufen werden, sondern auch fahrdynamisch erzeugte Horizontalkräfte gemessen werden. Dies führt nachteilig zu einer Verfälschung der Ergebnisse der Stützlastbestimmung.

Hiervon ausgehend liegt der vorliegenden Erfindung die Aufgabe zugrunde, ein gegenüber dem Stand der Technik verbessertes Wiegesystem bereitzustellen, welches besonders genaue Stützlastbestimmungen ermöglicht und dabei gleichzeitig kostengünstig zu fertigen und schnell zu warten und zu reparieren ist.

Diese Aufgabe wird durch ein Wiegesystem zur direkten Stützlastmessung eines Sattelaufliegers mit den Merkmalen des unabhängigen Patentanspruchs 1 sowie durch einen Sattelauflieger mit einem derartigen Wiegesystem nach Patentanspruch 10 gelöst.

Das erfindungsgemäße Wiegesystem [1] zur direkten Stützlastmessung eines Sattelaufliegers [2] umfasst wenigstens ein Befestigungsmittel [11] zur Befestigung eines Königzapfens [111] an einem Rahmen [22] des Sattelaufliegers [2]; eine Aufliegerplatte [12] zur Wechselwirkung mit einer Sattelkupplung [31] einer Zugmaschine [3]; und ein zwischen dem Befestigungsmittel [11] und der Aufliegerplatte [12] angeordnetes Messsystem [13], wobei das Messsystem [13] eingerichtet ist, eine Krafteinwirkung auf die Aufliegerplatte [12] zu messen. Es zeichnet sich gegenüber gattungsbildenden Wiegesystemen dadurch aus, dass der Königszapfen [111] mittels des Befestigungsmittels [11] fest mit dem Rahmen [22] verbunden ist; und dass die Aufliegerplatte [12] eingerichtet ist, sich gegenüber dem Königszapfen [111] unabhängig zu bewegen.

Ein Königszapfen [111], welcher fest mit dem Rahmen [22] verbunden ist und gegenüber dem sich die Aufliegerplatte [12] unabhängig bewegen kann, führt vorteilhaft zu einer mechanischen Entkopplung von Königszapfen [111] und der Aufliegerplatte [12] als Mittel zur Wechselwirkung des Sattelaufliegers [2] mit der Sattelkupplung [31] des Zugfahrzeugs [3]. Durch besagte Entkopplung wirken auf die Aufliegerplatte [12] vorteilhaft hauptsächlich Vertikalkräfte, welche vom Messsystem [13] zur Bestimmung der Stützlast berücksichtigt werden. Die Horizontalkräfte, die bei Lenkmanövern durch Reibung zwischen der Sattelkupplung [31] der Zugmaschine und der Aufliegerplatte [12] entstehen, sind im Vergleich zu fahrdynamischen Kräften am Königszapfen [111] gering. Beim erfindungsgemäßen Wiegesystem [1] werden nahezu alle fahrdynamisch erzeugten Horizontalkräfte über den entkoppelten Königszapfen [111] in den Rahmen [22] geleitet, ohne das Messsystem [13] zu durchlaufen, was vorteilhaft die Genauigkeit der Stützlastmessung erhöht.

Weitere vorteilhafte Ausgestaltungen und Weiterbildungen, welche einzeln oder in Kombination miteinander einsetzbar sind, sind Gegenstand der abhängigen Ansprüche.

In einer bevorzugten Ausgestaltung der Erfindung hat es sich bewährt, wenn der Rahmen [22] im Bereich des Befestigungsmittels [11], vorzugsweise im Bereich des Königszapfens [111], wenigstens ein Widerlager [21], bevorzugt zwei Widerlager [21], umfasst, welches eingerichtet ist, mit dem Messsystem [13] in Wirkverbindung zu treten, wobei die Verbindung zwischen Widerlager [21] und Messsystem [13] insbesondere über eine Schraubverbindung erfolgt. Das oder die Widerlager [21] nehmen vorteilhaft die Kräfte, welche von der Aufliegerplatte [12] auf das Messsystem [13] übertragen werden auf und leiten sie an den Rahmen [22] weiter. Die Schraubverbindung erleichtert hierbei vorteilhaft die Wartung und den Austausch von Verschleißteilen.

In einer weiteren bevorzugten Ausgestaltung hat sich bewährt, wenn die Aufliegerplatte [12] über das Messsystems [13] mit dem Rahmen [22], insbesondere dessen Widerlager [21] wirkverbunden ist, wobei die die Verbindung zwischen Aufliegerplatte [12] und Messsystem [13] insbesondere über eine Schraubverbindung erfolgt. Eine Wirkverbindung der Aufliegerplatte [12] mit dem Rahmen [22], insbesondere dessen Widerlager [21], über das Messsystem [13] ermöglicht vorteilhaft die Messung der durch beim Abstützen der Aufliegerplatte [12] auf der Sattelkupplung [31] erzeugten Kräfte. Auch hier erleichtert die Schraubverbindung vorteilhaft die Wartung und den Austausch von Verschleißteilen.

Besonders bevorzugt ist dabei eine Ausgestaltung der Erfindung, bei der das Messsystem [13] wenigstens eine Doppelscherbalken-Wägezelle, bevorzugt zwei Doppelscherbalken-Wägezellen, umfasst. Doppelscherbalken-Wägezellen sind Wägezellen mit zwei Federkörpern und daran angeordneten Dehnungsmessstreifen, die Deformationen der Federkörper registrieren und in elektrische Signale umwandeln. Sie werden zum Messen von Scherkräften eingesetzt. Messsystemen [13], welche wenigstens eine Doppelscherbalken-Wägezelle umfassen, benötigen vorteilhaft einen besonders geringen Bauraum für eine Befestigung an der Aufliegerplatte [12] und/oder am Widerlager [21] des Rahmens [22].

Dabei ist von Vorteil, wenn das Messsystem [13], insbesondere die wenigstens eine Doppelscherbalken-Wägezelle, derart zwischen dem Befestigungsmittel [11] und der Aufliegerplatte [12] angeordnet sind, dass sie bei Gebrauch mit ihrer Längsachse [131] in Fahrtrichtung des Sattelaufliegers [2] weist. Bei einer Verbiegung der Seitenbereiche der Aufliegerplatte [12] kann ein quer zur Fahrtrichtung angeordnetes Messsystem [13], insbesondere eine derart angeordnete Doppelscherbalken-Wägezelle, besagte Verbiegung lediglich einseitig erfassen. Die Scherungsverschiebung wird dann an dieser Seite nachteilig verstärkt und kann die Messung der Krafteinwirkung auf die Aufliegerplatte [12] verfälschen. Bei einem in Fahrtrichtung orientierten Messsystem [13] wirken bei besagter Verbiegung der Aufliegerplatte [12] auf das Messsystem [13], insbesondere eine Doppelscherbalken-Wägezelle, stattdessen Torsionskräfte ein, welche vom Messsystem [13] nicht erfasst werden. Die Messgenauigkeit des Messsystems [13] wird dadurch vorteilhaft erhöht.

In einer weiteren bevorzugten Ausgestaltung der Erfindung kann das Befestigungsmittel [11] eine Montageplatte [112] umfassen, welche wenigstens einen Längsträger [113] zur Wirkverbindung mit dem Königszapfen [111] und wenigstens einen Querträger [116], welcher im Wesentlichen senkrecht zum Längsträger [113] verläuft, aufweist. Eine Montageplatte [112] verbindet vorteilhaft Längsträger und Querträger des Rahmens [22] miteinander und wirkt dabei als ein Schubfeld für das erste Rahmensegment. Bei einem derartigen Schubfeld kann der Rahmen [22] Längskräfte und die Montageplatte [112] Schubkräfte aufnehmen, wobei diese geometrische Aufteilung der Kraftleitung vorteilhaft eine erheblich höhere Krafteinleitung bei geringerem Materialaufwand erlaubt.

Dabei hat sich bewährt, wenn die Montageplatte [112] wenigstens zwei Längsrippen [114; 115] umfasst, welche zumindest abschnittsweise parallel zum Längsträger [113] verlaufen.

Darüber hinaus ist von Vorteil, wenn die Längsrippen [114; 115] und der Längsträger [113] jeweils über wenigstens ein, vorzugsweise zwei, Querelemente [117] miteinander verbunden sind. Längsrippen [114; 115], welche zumindest abschnittsweise parallel zum Längsträger [113] verlaufen, schaffen einerseits ein Trägheitsmoment und verhindern auf diese Weise vorteilhaft eine Verformung der Montageplatte [112], welche insbesondere durch die Einwirkung von Vertikalkräften auf die Montageplatte [112] bzw. aufgrund der Krafteinleitung durch den Königszapfen [111] verursacht sein kann. Andererseits bilden sie zusammen mit dem oder den Querelementen [117], welche vorzugsweise jeweils so lange ausgebildet sind, dass sie den Längsträger [113] mit wenigstens einer der Längsrippen [114; 115] verbinden, eine weitere Rahmenstruktur innerhalb des Befestigungsmittels [11], was wiederum vorteilhaft zu einer weiteren Erhöhung der Stabilität des Befestigungsmittels [11] führt.

Schließlich kann in einer bevorzugten Ausgestaltung der Erfindung die Aufliegerplatte [12] eine Aussparung [124] für den Königzapfen [111] umfassen, wobei die Aussparung [124] vorzugsweise kreisförmig ausgestaltet ist und wobei der Durchmesser der Aussparung [124] 16 bis 24 mm, bevorzugt 20 mm, größer als der Durchmesser eines Aufnahmetellers [1112] des Königzapfens [111], oder 5 bis 10 mm, bevorzugt 7 mm, größer als der Durchmesser eines Zapfenbereichs [111] des Königszapfens [111] ist. Eine derart ausgestaltete Aussparung [124] bietet einen genügend großen Abstand für den bei Benutzung durch die Aussparung [124] geführten Königszapfen [111] zu allen Seiten, um einen Kontakt zwischen Königszapfen [111] und Aufliegerplatte [12], insbesondere einen Kontakt zwischen dem Aufnahmeteller [1112] und/oder dem Zapfenbereich [1111] des Königszapfens [111] und der Aufliegerplatte [12], zu vermeiden.

Ein erfindungsgemäßer Sattelauflieger [2] umfasst einen Rahmen [22], wenigstens eine am Rahmen [22] angeordnete Achse [23] und wenigstens ein Achslast-Messsystem [4] zur Messung der auf die wenigstens eine Achse [23] wirkende Gewichtskraft des Sattelaufliegers [2]. Zudem zeichnet er sich durch ein Wiegesystem [1] wie zuvor beschrieben aus. Eine Kombination der durch das erfindungsgemäße Wiegesystem [1] erhaltenen Daten der Stützlast und der über das Achslast-Messsystem [4] erhaltenen Daten der Achslast des Sattelaufliegers [2] können vorteilhaft Echtzeitdaten über den Beladezustand bzw. das Ladegewicht des Sattelaufliegers [2], insbesondere auch während der Fahrt erhalten werden. Eine Steuerung der Ausbringmenge von Dünger auf einem Feld, beispielsweise, kann dadurch vorteilhaft variiert werden, da die Beladung dauerhaft überwacht wird. Das erfindungsgemäße Wiegesystem [1] liefert hierbei vorteilhaft besonders genaue Messwerte für die Stützlast, die dann in die weiteren Berechnungen einfließen und so insgesamt die Genauigkeit der Ladegewichtsbestimmung erhöhen.

Zusätzliche Einzelheiten und weitere Vorteile der Erfindung werden nachfolgend an Hand bevorzugter Ausführungsbeispiele, auf welche die vorliegende Erfindung jedoch nicht beschränkt ist, und in Verbindung mit der beigefügten Zeichnung beschrieben.

Darin zeigen schematisch:
- Fig. 1: in einer Seitenansicht eine Zugmaschine [3] mit einer daran über eine Sattelkupplung [31] verbundene Ausgestaltung eines erfindungsgemäßen Sattelaufliegers [2] eines Agrar-Lastwagens;
- Fig. 2: eine Ausgestaltung eines erfindungsgemäßen Wiegesystems [1] bei Gebrauch, wobei ein Königszapfen [111] mit einer Sattelkupplung [31] verbunden ist, in einer Ansicht von einer Zugmaschine [3] in Richtung eines Sattelaufliegers [2];
- Fig. 3: eine erste Ausgestaltung eines Befestigungsmittels [11] ohne Messsystem [13], Widerlager [21] und Rahmen [22];
- Fig. 4: eine zweite Ausgestaltung eines Befestigungsmittels [11] nun mit Messsystem [13] und Widerlager [21] des Rahmens [22]; und
- Fig. 5: eine Ausgestaltung einer Aufliegerplatte [12].

Bei der nachfolgenden Beschreibung bevorzugter Ausführungsformen der vorliegenden Erfindung bezeichnen gleiche Bezugszeichen gleiche oder vergleichbare Komponenten.

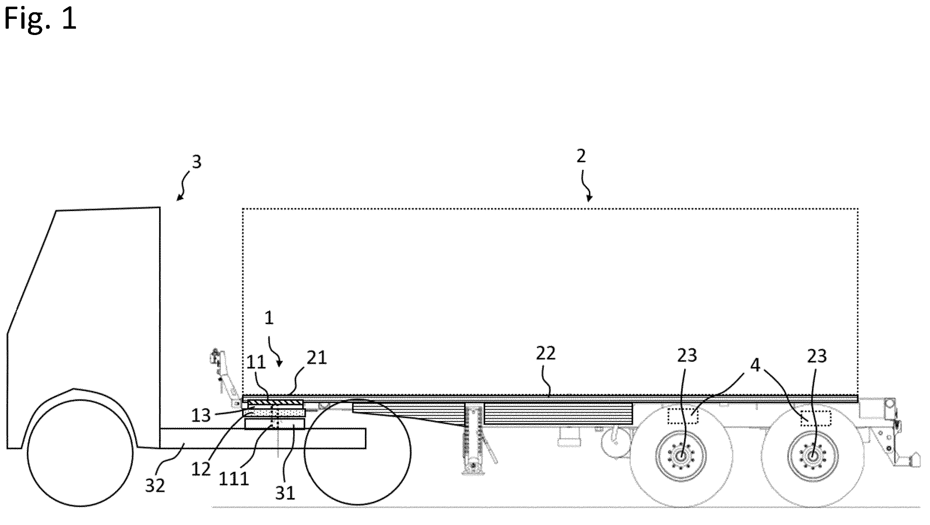

**In** **Fig. 1** ist in einer Seitenansicht eine Zugmaschine 3 mit einer daran über eine Sattelkupplung 31 verbundene Ausgestaltung eines erfindungsgemäßen Sattelaufliegers 2 eines Agrar-Lastwagens gezeigt.

Ein erfindungsgemäßer Sattelauflieger 2 umfasst einen Rahmen 22, wenigstens eine am Rahmen 22 angeordnete Achse 23 und wenigstens ein Achslast-Messsystem 4 zur Messung der auf die wenigstens eine Achse 23 wirkende Gewichtskraft des Sattelaufliegers 2. In Fig. 1 ist exemplarisch ein Sattelauflieger 2 mit zwei Achsen 23 und zwei im Bereich der Achsen 23 angeordneten Achslast-Messsystemen 4 dargestellt. Als Achslast-Messystem 4 können dabei verschiedene Systeme des Stands der Technik Verwendung finden. So kann bei Sattelaufliegern 2, die mit einem Luftfederfahrwerk ausgestattet sind, die Achslast beispielsweise über die Pneumatikdrücke im Fahrwerk ermittelt werden. Bei Fahrwerken mit hydraulischer Federung kann entsprechend über einen Anstieg bzw. Abfall des Hydraulikdrucks die Achslast bestimmt werden. Es sind auch sog. Brückenwaagesysteme bekannt, bei denen das Fahrgestell sowie der Aufbau des Sattelaufliegers jeweils einen eigenen tragenden Rahmen aufweisen und zwischen diesem "Doppelrahmen" Wiegezellen zur Achslastbestimmung angeordnet sind. Darüber hinaus finden sich im Stand der Technik auch Beispiele für Achslast-Messsysteme auf Basis einer Winkelmessung oder über eine Messung des sich ändernden Magnetfelds bei der Verformung eines ferromagnetischen Radstummels durch Belastung.

Bei der Benutzung des Agrar-Lastwagens sind Zugmaschine 3 und Sattelauflieger 2 normalerweise über eine Sattelkupplung 31 miteinander verbunden. Die Sattelkupplung 31 kann, wie in Fig. 1 gezeigt, am Rahmen 32 der Zugmaschine 3, insbesondere im Bereich der Hinterachse der Zugmaschine 3 bzw. zwischen der Vorderachse und der Hinterachse der Zugmaschine 3 angeordnet sein und weist vorzugsweise eine Aufnahme für ein korrespondierend zu besagter Aufnahme ausgebildetes Verbindungselement am Sattelauflieger 2 auf, dem sog. Zugsattelzapfen oder auch Königszapfen 111. Aus dem Stand der Technik ist eine Vielzahl von verschieden ausgestalteten Sattelkupplungen 31 bekannt, welche alle in Verbindung mit dem erfindungsgemäßen Wiegesystem 1 verwendet werden können, da besagtes Wiegesystem 1 ausschließlich am Sattelauflieger 2 angeordnet und somit von der Ausgestaltung der Zugmaschine 3 vorteilhaft unabhängig ist.

Im Kopplungsbereich von Zugmaschine 3 und Sattelauflieger 2 umfasst der erfindungsgemäße Sattelauflieger 2 ein erfindungsgemäßes Wiegesystem 1 zur direkten Stützlastmessung des Sattelaufliegers 2 (hier schematisch dargestellt). Aus einer Kombination der durch das erfindungsgemäße Wiegesystem 1 erhaltenen Daten der Stützlast und der über das Achslast-Messsystem 4 erhaltenen Daten der Achslast des Sattelaufliegers 2 können vorteilhaft Echtzeitdaten über den Beladezustand bzw. das Ladegewicht des Sattelaufliegers 2, insbesondere auch während der Fahrt erhalten werden. So kann bei einem Agrar-Lastwagen mit einem erfindungsgemäßen Sattelauflieger 2 beispielsweise kontinuierlich während des Ausbringens verfolgt werden, welche Menge Dünger auf einer landwirtschaftlichen Nutzfläche verteilt wird und dadurch die Dosierung im Sinne des "Precision Farming" Konzepts vorteilhaft an die jeweiligen Umgebungsbedingungen angepasst werden.

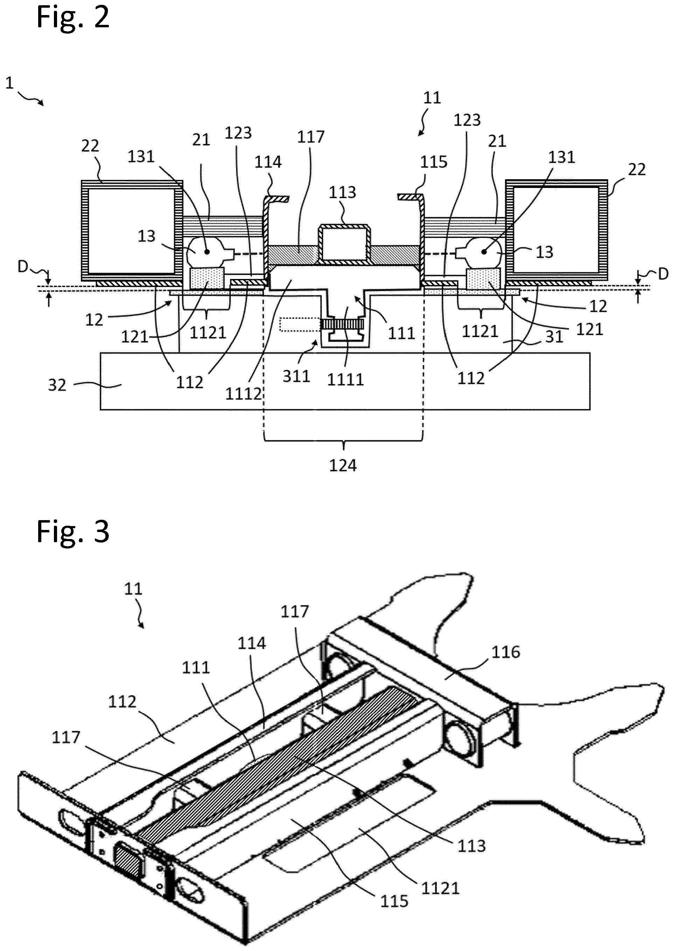

**Fig. 2** zeigt nun eine Ausgestaltung eines erfindungsgemäßen Wiegesystems 1 bei Gebrauch, wobei ein Königszapfen 111 mit einer Sattelkupplung 31 verbunden ist. Fig. 2 stellt eine Ansicht von der Zugmaschine 3 in Richtung des Sattelaufliegers 2 dar, also entgegen der Fahrtrichtung.

Ein erfindungsgemäßes Wiegesystem 1 zur direkten Stützlastmessung eines Sattelaufliegers 2 umfasst wenigstens ein Befestigungsmittel 11 zur Befestigung eines Königzapfens 111 an einem Rahmen 22 des Sattelaufliegers 2; eine Aufliegerplatte 12 zur Wechselwirkung mit einer Sattelkupplung 31 einer Zugmaschine 3; und ein zwischen dem Befestigungsmittel 11 und der Aufliegerplatte 12 angeordnetes Messsystem 13. Das Messsystem 13 ist dazu eingerichtet, eine Krafteinwirkung auf die Aufliegerplatte 12 zu messen. Im hier dargestellten Beispiel ist der Königszapfen 111 in die Aufnahme der am Rahmen 32 der Zugmaschine 3 angeordneten Sattelkupplung 31 eingeführt und kann über einen Verschluss 311 vor einem unbeabsichtigten Lösen gesichert sein. Bei Benutzung gleitet die Aufliegerplatte 12 des Wiegesystem 1 auf der Oberseite der Sattelkupplung 31, wobei zur Minimierung des Verschleißes sowohl die Oberseite der Sattelkupplung 31 als auch die der Sattelkupplung 31 zugewandte Seite der Aufliegerplatte 12 mit Schmierfett bestrichen sein können. Besagte Gleitung bzw. Berührung von Sattelkupplung 31 und Aufliegerplatte 12 stellt eine Wechselwirkung im Sinne der vorliegenden Erfindung dar.

Der Königszapfen 111 ist erfindungsgemäß mittels des Befestigungsmittels 11 fest mit dem Rahmen 22 verbunden und die Aufliegerplatte 12 ist eingerichtet, sich gegenüber dem Königszapfen 111 unabhängig zu bewegen.

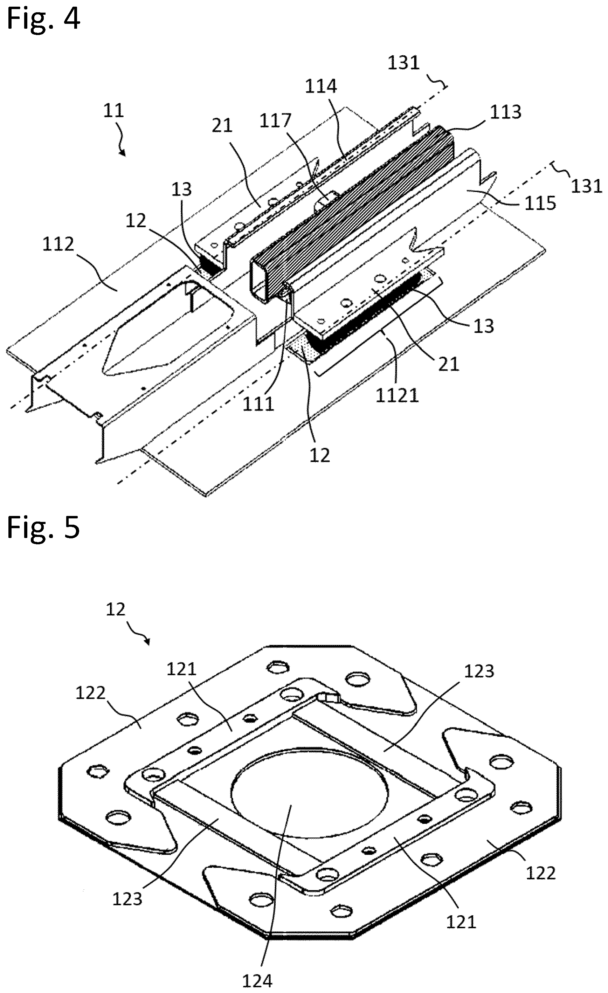

Die **Fig. 3** und **4** zeigen verschiedene Ausgestaltungen von Befestigungsmitteln 11. In **Fig. 3** ist eine erste Ausgestaltung eines Befestigungsmittels 11 ohne Messsystem 13, Widerlager 21 und Rahmen 22 dargestellt, wohingegen in **Fig. 4** eine zweite Ausgestaltung eines Befestigungsmittels 11 nun mit Messsystem 13 und Widerlager 21 des Rahmens 22 gezeigt ist.

Zur festen Verbindung des Königszapfens mit dem Rahmen 22 kann das Befestigungsmittel 11 vorzugsweise eine Montageplatte 112 umfassen, welche wenigstens einen Längsträger 113 zur Wirkverbindung mit dem Königszapfen 111 und wenigstens einen Querträger 116, welcher im Wesentlichen senkrecht zum Längsträger 113 verläuft, aufweisen kann. Der Längsträger 113 kann als Vierkantrohr ausgebildet sein, welches durch eine Frontseite der Montageplatte 112 gebrochen sowie zumindest mit dem Querträger 116 stoffschlüssig verbunden, insbesondere verschweißt sein kann (vgl. Fig. 3). Der Königzapfen 111 kann dann wiederum stoffschlüssig mit dem Befestigungsmittel 11, insbesondere mit der Montageplatte 112 und/oder dem Längsträger 113, und/oder mit dem Rahmen 22 verbunden sein, wobei die stoffschlüssige Verbindung vorzugsweise durch Verschweißen erzeugt wird. Im Gegensatz zum Stand der Technik, bei dem der Königszapfen 111 fest mit der Aufliegerplatte 12 verbunden ist, kann auf diese Weise vorteilhaft die Krafteinwirkung der Sattelkupplung 31 auf die Aufliegerplatte 12 von der Krafteinwirkung der Sattelkupplung 31 auf den Königszapfen 111 mechanisch entkoppelt werden.

Der Rahmen 22 kann im Bereich des Befestigungsmittels 11, vorzugsweise im Bereich des Königszapfens 111, wenigstens ein Widerlager 21 oder bevorzugt wie in den Fig. 2 und 4 gezeigt zwei Widerlager 21 umfassen. Besagte Widerlager 21 können insbesondere dazu eingerichtet sein mit dem Messsystem 13 in Wirkverbindung zu treten, wobei die Verbindung zwischen Widerlager 21 und Messsystem 13 insbesondere über eine Schraubverbindung erfolgen kann. In den Fig. 2 bis 4 ist auch zu sehen, dass die Montageplatte 112 wenigstens zwei Längsrippen 114 und 115 umfassen kann, welche zumindest abschnittsweise parallel zum Längsträger 113 verlaufen können. Auch die Längsrippen 114 und 115 können wie der Längsträger 113 durch die Frontseite der Montageplatte 112 gebrochen und mit besagter Montageplatte 112 stoffschlüssig verbunden, insbesondere verschweißt sein. Der Durchbruch durch die Frontseite der Montageplatte 112 erleichtert hierbei vorteilhaft die Herstellung der Schweißverbindungen.

Das oder die Widerlager 21 können dann vorzugsweise an besagten Längsrippen 114 und 115 angeordnet, insbesondere mit diesen verschweißt sein. Die Längsrippen 114 und 115 und der Längsträger 113 können zudem jeweils über wenigstens ein (vgl. Fig. 4), vorzugsweise zwei (vgl. Fig. 3), Querelemente 117 miteinander verbunden sein, wodurch die Stabilität des Befestigungsmittels 11 vorteilhaft erhöht wird.

In Fig. 2 ist darüber hinaus zu sehen, dass die Aufliegerplatte 12 über das Messsystems 13 mit dem Rahmen 22, insbesondere dessen Widerlager 21 wirkverbunden sein kann, wobei die Verbindung zwischen Aufliegerplatte 12 und Messsystem 13 insbesondere über eine Schraubverbindung erfolgen kann. Die Montageplatte 112 weist hierzu vorzugsweise Öffnungen 1121 auf, welche in ihrer Positionierung korrespondierend zur Position der Widerlager 21 des Rahmens 22 und der Widerlager 121 der Aufliegerplatte 12 ausgebildet sind und so vorteilhaft die Wirkverbindung von Widerlager 21 des Rahmens 22, Messsystem 13 und Widerlager 121 der Aufliegerplatte 12 ermöglichen. Zwischen der Montageplatte 112 und der Aufliegerplatte 12 kann darüber hinaus eine Abstand D vorgesehen sein, welcher vorteilhaft eine Verformung des Messsystems 13, insbesondere der Doppelscherbalken-Wägezelle, zulassen kann. Besagter Abstand D kann einen Wert zwischen 8 und 10 mm, bevorzugt 9 mm, aufweisen. Das Messsystem 13 umfasst dabei vorzugsweise wenigstens eine, bevorzugt jedoch wie hier zu sehen zwei Doppelscherbalken-Wägezellen, welche insbesondere derart zwischen dem Befestigungsmittel 11 und der Aufliegerplatte 12 angeordnet ist, dass sie bei Gebrauch mit ihrer Längsachse 131 in Fahrtrichtung des Sattelaufliegers 2 weisen. Im hier gezeigten Beispiel sind die beiden, als Doppelscherbalken-Wägezellen ausgestalteten Messsysteme 13 links und rechts vom Längsträger 113 und jenseits der Längsrippen 114 und 115 angeordnet, verlaufen parallel zu diesen und weisen somit in Fahrtrichtung des Sattelaufliegers 2.

**Fig. 5** zeigt schließlich eine Ausgestaltung einer Aufliegerplatte 12 in einer perspektivischen Ansicht.

Die Aufliegerplatte kann aus sieben Einzelteilen bestehen, welche vorzugsweise miteinander stoffschlüssig verbunden, insbesondere miteinander verschweißt werden: Auf einer Grundplatte, welche bevorzugt 850 x 850 mm misst und auf die die Vertikallast übergeben wird, können insbesondere zwei Widerlager 121 für das oder die Messsysteme 13, zwei Randversteifungen 122 und/oder zwei Querversteifungen 123 angeordnet sein.

Die Aufliegerplatte 12 umfasst zudem insbesondere eine Aussparung 124 für den Königzapfen 111, wobei die Aussparung 124 vorzugsweise kreisförmig ausgestaltet ist und wobei der Durchmesser der Aussparung 124 vorzugsweise größer als der Durchmesser des Königzapfens 111 ist. Wie in Fig. 2 exemplarisch dargestellt, kann der Königszapfen 111 einen näherungsweise pilzförmigen Aufbau aufweisen, wobei der Pilzkopf durch einen Aufnahmeteller 1112 und der Pilzfuß durch einen Zapfenbereich 1111 ausgebildet sein kann. Über den Aufnahmeteller 1112 kann der Königszapfen 111 insbesondere mit der Montageplatte 112 stoffschlüssig, bevorzugt durch einen Schweißverbindung, verbunden sein. Der Aufnahmeteller 1112 und der Zapfenbereich 1111 des Königszapfen 111 können dabei zwei separate Bauteile bilden, insbesondere kann der Zapfenbereich 1111 des Königszapfens 111 mit dem Aufnahmeteller 1112 des Königszapfens 111 verschraubbar sein. Der Königszapfen 111 mit Aufnahmeteller 1112 und der Zapfenbereich 1111 kann allerdings auch einstückig ausgebildet sein.

Die Aussparung 124 gewährleistet vorteilhaft einen Abstand von 8 bis 12 mm, bevorzugt 10 mm, zum durch die Aussparung 124 geführten Aufnahmeteller 1112 des Königszapfen 111 bzw. einen Abstand von 2,5 bis 5 mm, bevorzugt 3,5 mm, zum durch die Aussparung 124 geführten Zapfenbereich 1111 des Königszapfen 111. Im Bereich der Aussparung 124 können dann vorzugsweise einander gegenüberliegend um besagte Aussparung 124 herum, die zwei Widerlager 121 und jeweils näherungsweise senkrecht dazu, die zwei Querversteifungen 123 angeordnet sein. Die Widerlager 121 können insbesondere als massive, vorzugsweise 25 mm dicke Bleche ausgestaltet sein, welche Bohrungen, insbesondere Durchgangsbohrungen und/oder Stufenbohrungen, zur Schraubverbindung mit dem Messsystem 13 umfassen können und welche die Grundsteifigkeit der Aufliegerplatte 12, insbesondere im Bereich der Messsysteme 13, vorteilhaft erhöhen. In einer Ausgestaltung können die Widerlager 121 beispielsweise jeweils vier korrespondierend zur Längsachse 131 des Messystems 13 ausgerichtete Bohrungen aufweisen, wobei die zwei bezüglich der Längsachse 131 des Messsystems 13 im Mittelbereich des Messsystems 13 und somit auch des jeweiligen Widerlagers 121 angeordneten Bohrungen als Stufenbohrungen und die bezüglich der Längsachse 131 des Messsystems 13 und somit auch des jeweiligen Widerlagers 121 im Außenbereich angeordneten Bohrungen als Durchgangsbohrungen ausgebildet sein können.

Die zwei Randversteifungen 122 können bevorzugt im Randbereich der Aufliegerplatte 12 angeordnet sein und dienen vorteilhaft dazu, die Bereiche außerhalb des oder der Messsysteme 13 lokal zu versteifen und somit ein Verformen der Aufliegerplatte 12 beim Neigen, Kippen oder Trampeln (= Wanken bzw. Schwingen der Starrachse) zu vermeiden. Damit die Randversteifungen 122 die Steifigkeit einer gleichermaßen dicken Platte bieten, können vorzugsweise Schweißlöcher in den Randversteifungen 122 vorgesehen sein, welche einen Kraftschluss gewährleisten. Die Schweißlöcher können an den Längsseiten insbesondere jeweils als drei Gleichdicke, also Polygone mit immer dem gleichen Abstand zur gegenüberliegenden Seite, ausgeführt sein. Die Querversteifungen 123 können schließlich vorzugsweise als ein Flachteil ausgestaltet sein, um einen Sattelhöhenverlust vorteilhaft zu reduzieren. Durch die gezielte Anordnung der Rand- 122 und Querversteifungen 123 an der Grundplatte der Aufliegerplatte 12 weist diese vorteilhaft - bei gleicher Stabilität für die Kraftaufnahme - ein um etwa ein Drittel geringeres Gewicht auf, als eine vollständig in einer Dicke gefertigte Aufliegerplatte des Stands der Technik. Eine derart ausgestaltete Aufliegerplatte 12 ermöglicht zudem vorteilhaft, den Königszapfen 111 mit dem Befestigungsmittel 11 stoffschlüssig, insbesondere durch Schweißen, zu verbinden, ohne den Aufnahmeteller 1112 des Königszapfens 111 unterbauen zu müssen, um die geforderten Kuppelmaße zu erreichen. Die Aufliegerplatte 12 kann bevorzugt aus einem hochfesten Stahl wie beispielsweise S700MC-Stahl oder S900-Stahl gefertigt sein und weist vorzugsweise eine Gesamtbaugruppendicke von 30 bis 36 mm, besonders bevorzugt von 33 mm auf.

Die vorliegende Erfindung betrifft ein Wiegesystem 1 zur direkten Stützlastmessung eines Sattelaufliegers 2 wenigstens umfassend: ein Befestigungsmittel 11 zur Befestigung eines Königzapfens 111 an einem Rahmen 22 des Sattelaufliegers 2; eine Aufliegerplatte 12 zur Wechselwirkung mit einer Sattelkupplung 31 einer Zugmaschine 3; und ein zwischen dem Befestigungsmittel 11 und der Aufliegerplatte 12 angeordnetes Messsystem 13, wobei das Messsystem 13 eingerichtet ist, eine Krafteinwirkung auf die Aufliegerplatte 12 zu messen. Es zeichnet sich dadurch aus, dass der Königszapfen 111 mittels des Befestigungsmittels 11 fest mit dem Rahmen 22 verbunden ist; und dass die Aufliegerplatte 12 eingerichtet ist, sich gegenüber dem Königszapfen 111 unabhängig zu bewegen. Beim erfindungsgemäßen Wiegesystem 1 werden nahezu alle fahrdynamisch erzeugten Horizontalkräfte über den entkoppelten Königszapfen 111 in den Rahmen 22 geleitet, ohne das Messsystem 13 zu durchlaufen, und über die Aufliegerplatte 12 hauptsächlich Vertikalkräfte bei der Stützlastmessung berücksichtigt, was deren Genauigkeit vorteilhaft erhöht

### Bezugszeichenliste

- 1: Wiegesystem
- 11: Befestigungsmittel
- 111: Königzapfen
- 1111: Zapfenbereich des Königszapfens (111)
- 1112: Aufnahmeteller des Königszapfens (111)
- 112: Montageplatte
- 1121: Öffnung
- 113: Längsträger
- 114: Längsrippe
- 115: Längsrippe
- 116: Querträger
- 117: Querelement
- 12: Aufliegerplatte
- 121: Widerlager
- 122: Randversteifung
- 123: Querversteifung
- 124: Aussparung für Königszapfen (111)
- 13: Messsystem
- 131: Längsachse
- 2: Sattelauflieger
- 21: Rahmen-Widerlager
- 22: Rahmen
- 23: Achse
- 3: Zugmaschine
- 31: Sattelkupplung
- 311: Verschluss
- 32: Rahmen der Zugmaschine (3)
- 4: Achslastmesssystem
- D: Abstand zwischen Aufliegerplatte (12) und Montageplatte (112)

## Patentansprüche

1. Wiegesystem (1) zur direkten Stützlastmessung eines Sattelaufliegers (2) wenigstens umfassend:
- ein Befestigungsmittel (11) zur Befestigung eines Königzapfens (111) an einem Rahmen (22) des Sattelaufliegers (2);
- eine Aufliegerplatte (12) zur Wechselwirkung mit einer Sattelkupplung (31) einer Zugmaschine (3); und
- ein zwischen dem Befestigungsmittel (11) und der Aufliegerplatte (12) angeordnetes Messsystem (13), wobei das Messsystem (13) eingerichtet ist, eine Krafteinwirkung auf die Aufliegerplatte (12) zu messen;
**dadurch gekennzeichnet,**
- **dass** der Königszapfen (111) mittels des Befestigungsmittels (11) fest mit dem Rahmen (22) verbunden ist;
- und **dass** die Aufliegerplatte (12) eingerichtet ist, sich gegenüber dem Königszapfen (111) unabhängig zu bewegen.

2. Wiegesystem (1) nach Anspruch 1, **dadurch gekennzeichnet, dass** der Rahmen (22) im Bereich des Befestigungsmittels (11), vorzugsweise im Bereich des Königszapfens (111), wenigstens ein Widerlager (21), bevorzugt zwei Widerlager (21), umfasst, welches eingerichtet ist, mit dem Messsystem (13) in Wirkverbindung zu treten, wobei die Verbindung zwischen Widerlager (21) und Messsystem (13) insbesondere über eine Schraubverbindung erfolgt.

3. Wiegesystem (1) nach Anspruch 1 oder 2, **dadurch gekennzeichnet, dass** die Aufliegerplatte (12) über das Messsystems (13) mit dem Rahmen (22), insbesondere dessen Widerlager (21) wirkverbunden ist, wobei die Verbindung zwischen Aufliegerplatte (12) und Messsystem (13) insbesondere über eine Schraubverbindung erfolgt.

4. Wiegesystem (1) nach einem der Ansprüche 1 bis 3, **dadurch gekennzeichnet, dass** das Messsystem (13) wenigstens eine Doppelscherbalken-Wägezelle, bevorzugt zwei Doppelscherbalken-Wägezellen, umfasst.

5. Wiegesystem (1) nach Anspruch 4, **dadurch gekennzeichnet, dass** das Messsystem (13), insbesondere die wenigstens eine Doppelscherbalken-Wägezelle, derart zwischen dem Befestigungsmittel (11) und der Aufliegerplatte (12) angeordnet ist, dass sie bei Gebrauch mit ihrer Längsachse (131) in Fahrtrichtung des Sattelaufliegers (2) weist.

6. Wiegesystem (1) nach einem oder mehreren der vorherigen Ansprüche, **dadurch gekennzeichnet, dass** das Befestigungsmittel (11) eine Montageplatte (112) umfasst, welche wenigstens einen Längsträger (113) zur Wirkverbindung mit dem Königszapfen (111) und wenigstens einen Querträger (116), welcher im Wesentlichen senkrecht zum Längsträger (113) verläuft, aufweist.

7. Wiegesystem (1) nach Anspruch 6, **dadurch gekennzeichnet, dass** die Montageplatte (112) wenigstens zwei Längsrippen (114; 115), welche zumindest abschnittsweise parallel zum Längsträger (113) verlaufen, umfasst.

8. Wiegesystem (1) nach Anspruch 7, **dadurch gekennzeichnet, dass** die Längsrippen (114; 115) und der Längsträger (113) jeweils über wenigstens ein, vorzugsweise zwei, Querelemente (117) miteinander verbunden sind.

9. Wiegesystem (1) nach einem oder mehreren der vorherigen Ansprüche, **dadurch gekennzeichnet, dass** die Aufliegerplatte (12) eine Aussparung (124) für den Königzapfen (111) umfasst, wobei die Aussparung (124) vorzugsweise kreisförmig ausgestaltet ist und wobei der Durchmesser der Aussparung (124)
- 16 bis 24 mm, bevorzugt 20 mm, größer als der Durchmesser eines Aufnahmetellers (1112) des Königzapfens (111); oder
- 5 bis 10 mm, bevorzugt 7 mm, größer als der Durchmesser eines Zapfenbereichs (1111) des Königszapfens (111) ist.

10. Sattelauflieger (2) mit einem Rahmen (22), wenigstens einer am Rahmen (22) angeordneten Achse (23) und wenigstens einem Achslast-Messsystem (4) zur Messung der auf die wenigstens eine Achse (23) wirkende Gewichtskraft des Sattelaufliegers (2), **gekennzeichnet durch** ein Wiegesystem (1) zur direkten Stützlastmessung des Sattelaufliegers (2) nach einem der Ansprüche 1 bis 9.

## Claims

1. Weighing system (1) for direct support load measurement of a semi-trailer (2), comprising at least:
- a fastening means (11) for attaching a kingpin (111) to a frame (22) of the semi-trailer (2);
- a trailer plate (12) for interaction with a fifth wheel coupling (31) of a tractor unit (3); and
- a measuring system (13) arranged between the fastening means (11) and the trailer plate (12), wherein the measuring system (13) is configured to measure a force acting on the trailer plate (12);
**characterized in that**
- the kingpin (111) is rigidly connected to the frame (22) by means of the fastening means (11); and
- the trailer plate (12) is configured to move independently relative to the kingpin (111).

2. Weighing system (1) according to claim 1, **characterized in that** the frame (22) in the area of the fastening means (11), preferably in the area of the kingpin (111), comprises at least one abutment (21), preferably two abutments (21), which is configured to interact with the measuring system (13), wherein the connection between the abutment (21) and the measuring system (13) is made in particular via a screw connection.

3. Weighing system (1) according to claim 1 or 2, **characterized in that** the trailer plate (12) is operatively connected to the frame (22), in particular its abutment (21), via the measuring system (13), wherein the connection between the trailer plate (12) and the measuring system (13) is made in particular via a screw connection.

4. Weighing system (1) according to one of claims 1 to 3, **characterized in that** the measuring system (13) comprises at least one double shear beam load cell, preferably two double shear beam load cells.

5. Weighing system (1) according to claim 4, **characterized in that** the measuring system (13), in particular the at least one double shear beam load cell, is arranged between the fastening means (11) and the trailer plate (12) such that, in use, its longitudinal axis (131) points in the direction of travel of the semi-trailer (2).

6. Weighing system (1) according to one or more of the preceding claims, **characterized in that** the fastening means (11) comprises a mounting plate (112) which has at least one longitudinal member (113) for operative connection with the kingpin (111) and at least one cross member (116), which runs essentially perpendicular to the longitudinal member (113).

7. Weighing system (1) according to claim 6, **characterized in that** the mounting plate (112) comprises at least two longitudinal ribs (114; 115), which run at least in sections parallel to the longitudinal member (113).

8. Weighing system (1) according to claim 7, **characterized in that** the longitudinal ribs (114; 115) and the longitudinal member (113) are each connected to one another via at least one, preferably two, cross elements (117).

9. Weighing system (1) according to one or more of the preceding claims, **characterized in that** the trailer plate (12) comprises a recess (124) for the kingpin (111), wherein the recess (124) is preferably circular and the diameter of the recess (124) is:
- 16 to 24 mm, preferably 20 mm, larger than the diameter of a receiving plate (1112) of the kingpin (111); or
- 5 to 10 mm, preferably 7 mm, larger than the diameter of a pin section (1111) of the kingpin (111).

10. Semi-trailer (2) with a frame (22), at least one axle (23) arranged on the frame (22), and at least one axle load measuring system (4) for measuring the weight force acting on the at least one axle (23) of the semi-trailer (2), **characterized by** a weighing system (1) for direct support load measurement of the semi-trailer (2) according to one of claims 1 to 9.

## Revendications

1. Système de pesée (1) pour la mesure directe de la charge d'appui d'une semi-remorque (2), comprenant au moins :
- un moyen de fixation (11) pour attacher une broche d'attelage (111) à un châssis (22) de la semi-remorque (2) ;
- une plaque de remorque (12) destinée à interagir avec un dispositif d'accouplement à sellette (31) d'un véhicule tracteur (3) ;
- et un système de mesure (13) disposé entre le moyen de fixation (11) et la plaque de remorque (12), ledit système de mesure (13) étant conçu pour mesurer une force agissant sur la plaque de remorque (12) ;
**caractérisé en ce que**
- la broche d'attelage (111) est reliée de manière rigide au châssis (22) au moyen du moyen de fixation (11) ; et la plaque de remorque (12) est conçue pour se déplacer indépendamment par rapport à la broche d'attelage (111).

2. Système de pesée (1) selon la revendication 1, **caractérisé en ce que** le châssis (22) dans la zone du moyen de fixation (11), de préférence dans la zone de la broche d'attelage (111), comprend au moins une butée (21), de préférence deux butées (21), conçue(s) pour interagir avec le système de mesure (13), la connexion entre la butée (21) et le système de mesure (13) étant réalisée notamment par une liaison vissée.

3. Système de pesée (1) selon la revendication 1 ou 2, **caractérisé en ce que** la plaque de remorque (12) est reliée fonctionnellement au châssis (22), en particulier à sa butée (21), via le système de mesure (13), la connexion entre la plaque de remorque (12) et le système de mesure (13) étant réalisée notamment par une liaison vissée.

4. Système de pesée (1) selon l'une des revendications 1 à 3, **caractérisé en ce que** le système de mesure (13) comprend au moins une cellule de charge à double poutre de cisaillement, de préférence deux cellules de charge à double poutre de cisaillement.

5. Système de pesée (1) selon la revendication 4, **caractérisé en ce que** le système de mesure (13), en particulier la ou les cellules de charge à double poutre de cisaillement, est disposé entre le moyen de fixation (11) et la plaque de remorque (12) de sorte qu'en utilisation, son axe longitudinal (131) pointe dans la direction de déplacement de la semi-remorque (2).

6. Système de pesée (1) selon une ou plusieurs des revendications précédentes, **caractérisé en ce que** le moyen de fixation (11) comprend une plaque de montage (112) qui possède au moins un longeron (113) pour la connexion fonctionnelle avec la broche d'attelage (111) et au moins une traverse (116), qui s'étend essentiellement perpendiculairement au longeron (113).

7. Système de pesée (1) selon la revendication 6, **caractérisé en ce que** la plaque de montage (112) comprend au moins deux nervures longitudinales (114 ; 115), qui s'étendent au moins partiellement parallèlement au longeron (113).

8. Système de pesée (1) selon la revendication 7, **caractérisé en ce que** les nervures longitudinales (114 ; 115) et le longeron (113) sont chacun reliés entre eux par au moins un, de préférence deux, éléments transversaux (117).

9. Système de pesée (1) selon une ou plusieurs des revendications précédentes, **caractérisé en ce que** la plaque de remorque (12) comprend un évidement (124) pour la broche d'attelage (111), l'évidement (124) étant de préférence circulaire et le diamètre de l'évidement (124) étant :
- de 16 à 24 mm, de préférence 20 mm, plus grand que le diamètre d'une plaque de réception (1112) de la broche d'attelage (111) ; ou
- de 5 à 10 mm, de préférence 7 mm, plus grand que le diamètre d'une section de broche (1111) de la broche d'attelage (111).

10. Semi-remorque (2) avec un châssis (22), au moins un essieu (23) disposé sur le châssis (22), et au moins un système de mesure de charge d'essieu (4) pour mesurer la force de poids agissant sur au moins un essieu (23) de la semi-remorque (2), **caractérisée par** un système de pesée (1) pour la mesure directe de la charge d'appui de la semi-remorque (2) selon l'une des revendications 1 à 9.
